# EUROPEAN PATENT SPECIFICATION

(11) **EP 1 966 060 B1**
(45) Date of publication and mention of the grant of the patent: **21.07.2010**
(21) Application number: 06820624.2
(22) Date of filing: 21.12.2006
(51) Int. Cl.: B65D 75/58, B65D 85/804

(54) **BEVERAGE PREPARATION CAPSULES**
GETRÄNKEZUBEREITUNGSPATRONEN
CAPSULES DE PREPARATION DE BOISSON

(30) Priority: 21.12.2005 GB 0525998
(43) Date of publication of application: 10.09.2008
(73) Proprietor: Mars Incorporated, McLean, Virginia 22101 (US)
(72) Inventor: BANIM, Fiachra, Basingstoke RG24 8NU (GB); PESKIN, Alexander, V., Moscow (RU); MORGAN, Goodwyn, C., Maclean, VA 22101 (US); SMITH, Michael, H., Basingstoke RG24 8NU (GB); HARGRAVES, Nigel, J., Basingstoke RG24 8NU (GB); WICKS, David, Basingstoke RG24 8NU (GB)
(74) Representative: James, Anthony Christopher W.P.
(86) International application number: PCT/GB2006/004858
(87) International publication number: WO 2007/072020

(56) References cited:
- EP-A- 0 657 591
- WO-A2-2004/078009
- US-A1- 2002 078 831

## Description

The present invention relates to beverage preparation capsules, in particular for use with beverage making machines, and to methods of manufacture of such capsules.

EP-A-0179641 describes sealed beverage capsules for use in automatic beverage making equipment. The capsules are in the form of a sachet of impermeable web material having a water injection nozzle welded into a top edge seam thereof. The bottom edge seam of the sachet may be closed by a heat-or-pressure-sensitive seal that opens when hot water or steam is injected into the sachet through the nozzle. A beverage-making ingredient is retained inside the sachet by a web of filtration sheet material that is welded to the inside surfaces of the impermeable sheet material making up the walls of the sachet. Beverage producing capsules of this type are also described in GB-A-2121762, GB-A-2123685, GB-A-2374795 and EP-A-0247841. Biodegradable (compostable) beverage producing capsules of this type are described in GB-A-2406305. Beverage producing capsules of this type have a number of advantages, and have achieved great commercial success over the last 20 years. Beverage producing capsules of this type are manufactured by Mars, Incorporated under the registered trade mark FLAVIA.

Nevertheless, certain disadvantages can be identified with beverage producing packages of the above type. The packages are formed from a heat-sealable, oxygen-and moisture-impermeable laminated sheet material that is relatively stiff and relatively expensive. This limits the range of package shapes and sizes that can readily and economically be produced. It can be difficult to provide suitable laminated materials that are fully biodegradable (compostable) and/or recyclable. Furthermore, a relatively high system pressure is needed in the beverage making equipment in order to ensure reliable opening of the base seam of the sachet.

It is desired to address these and related technical problems while retaining the many advantages of the existing capsules of the above type.

A cartrige having a filter sealed to the cartridge inlet on the inner side thereof is diclosed in document US-A-2002 078831.

In a first aspect, the present invention provides a beverage preparation capsule comprising: a body consisting essentially of a filtration sheet material defining an enclosure for retaining a beverage brewing ingredient, wherein two opposed edges of the filtration material are bonded together to form a sealed edge of the body; and a beverage preparation ingredient retained inside the capsule body; characterized in that a liquid injection nozzle for injecting liquid into the body is secured into the sealed edge by bonding of the nozzle to the said two opposed edges of the filtration sheet material.

The term "body" is used herein in its usual sense of a three-dimensional shape defining an enclosure for retaining the beverage brewing ingredient.

Suitably, the body consists essentially of the filtration sheet material. In contrast, the FLAVIA^{®} capsules described above have a body formed substantially of liquid-impermeable sheet material, optionally with a filter sheet bonded across an end of the capsule. For example, the body in the capsules according to the present invention may be in the form of a sachet of the filtration sheet material. The sachet may be formed from a single sheet of material in form-fill-seal machinery. In other embodiments, the sachet may be formed by bonding together separate front and back sheets of the filtration sheet material. In ether case, two opposed edges of the filtration sheet material may are bonded together to form a sealed edge of the body, and the nozzle may then be secured into the sealed edge by bonding of the nozzle to the said two opposed edges of the filtration sheet material. In other embodiments, the nozzle may be inserted through an aperture in the sheet of filtration material, for example by adhesive or thermal bonding of the sheet around the aperture to a flange on the nozzle.

The body may for example resemble a conventional tea bag or coffee bag. It will be appreciated that the capsule body may be of any suitable shape in plan view, including circular, square, other regular polygons, or trapezoidal. It is also envisaged that the capsule body may be tetrahedral.

The nozzle is suitably a thermoplastic nozzle having a tubular bore for receiving a liquid injector tube from a beverage preparation machine. The bore may be cylindrical, or it may have a non-circular cross-section. The nozzle may have a single outlet inside the enclosure, or it may have a plurality of outlets inside the enclosure, for example an outlet manifold for distributing the beverage making liquid within the enclosure. The nozzle outlet or outlets may be located at an edge of the enclosure, or they may be located more centrally within the enclosure. Suitable nozzles are described in EP-A-0179641 and WO-A-9905036.

Suitably, the nozzle is sealed by a frangible barrier to prevent escape of the beverage preparation ingredient prior to preparation of the beverage. The frangible barrier may comprise, or consist essentially of, a thin sheet of film material that can be pierced by a liquid injector tube on a beverage making machine. In other embodiments in which the nozzle is molded from thermoplastics, the frangible barrier may be a thermoplastic barrier molded in one piece with the nozzle, and having at least a peripheral region of weakness to enable the barrier to be pierced by a liquid injector tube on a beverage making machine.

Typically, the beverage brewing ingredient comprises ground coffee or leaf tea, preferably in an amount suitable to brew a single cup of beverage. For example, from 2g to 12g of ground coffee or from 1g to 9g of leaf tea. In other embodiments, the capsule may contain larger amounts of the ingredient for preparing larger portions or more concentrated portions of beverage.

In certain embodiments the internal volume of the capsule enclosure is from 25 to 100 cm³. The internal volume refers to the maximum volume of the capsule enclosure when any flexible parts are fully distended but not stretched.

It has been found that the simple capsules according to the present invention can be used in existing beverage making machines of the FLAVIA^{®} type without adaptation of the machines. The resulting beverages are of excellent quality. Surprisingly, the use of a capsule body formed from liquid-permeable material does not result in significant contamination of the machine or loss of beverage. The beverage simply flows through and then down the sides of the capsule, and then drops from the bottom of the capsule into the receptacle.

Nevertheless, in certain embodiments, the capsules according to the present invention further comprise a screen of a liquid-impermeable sheet material at least partially enclosing the capsule body. In certain embodiments the screen comprises an opening in a lower region thereof to allow escape of beverage from the capsule. In other embodiments, the screen comprises a seal in a lower region thereof that can be opened by cutting or tearing, or by the action of heat or pressure of beverage inside the screen, for example as described in relation to conventional FLAVIA capsules. The seal is then opened during, or immediately before, beverage preparation to allow escape of beverage from the capsule.

Suitably, the screen is substantially shaped as a funnel in a lower region thereof to direct the outflow of the beverage to an outlet at the base of the funnel. The funnel shape may be achieved, for example, by forming the screen from front and back faces of liquid-impermeable sheet material that are bonded together around a peripheral margin. The width of the front and back faces and/or the width of the peripheral margin may be tapered in a lower region of the screen to form the funnel.

It will also be appreciated that the screen may enclose a further beverage making ingredient, for example an ingredient located inside the screen but outside the filter enclosure for deposition into a receptacle during beverage preparation. The further beverage making ingredient may, for example, be selected from the group consisting of whiteners and sweeteners.

The whitener is usually at least partially dehydrated for ease of handling and maximum storage stability. Preferably, the water content of the whitener is less than 25% by weight. The whitener may be a liquid, for example a dairy-based liquid concentrate. Preferably, the whitener is a particulate solid. Typically the whitener comprises a partially or completely dehydrated dairy or non-dairy beverage whitener such as milk. Preferably, the whitener consists essentially of a foamable dairy or non-dairy milk concentrate, for example a granulated dried milk or a spray dried milk powder, optionally fat reduced. In certain embodiments the whitener comprises an instantised milk granulate. Various milk powders are suitable, and the fat content and other characteristics of the milk powder can be optimised for each case. The milk powder may form part of a hot chocolate drink or other beverage.

The dry weight of the whitener may be from about 1 to about 50g, preferably from about 5 to about 15g. In other words, the amount of the whitener in each capsule is preferably sufficient for one portion of a product, e.g. one cup of a beverage.

The capsule according to the present invention is normally disposable after one use. Suitably, the capsule is made substantially or completely from biodegradable (compostable) materials. The term "compostable" signifies that the material is substantially broken down within a few months, preferably within a few weeks, when it is composted. Typically, the sheet material is at least about 90% composted within six months, as determined by the method of ISO1485 as in EN13432. Typically, all components of the sheet material are compostable and/or recyclable, but in some embodiments there may be a non-compostable component, for example the nozzle may not be completely compostable. Thermoplastic compostable polymers that could be used for the capsules include polymers and copolymers of lactic acid, polyhydroxybutyrates, polyvinyl alcohols (PVOH), ethylene vinyl alcohols (EVOH), and mixtures thereof. However, the present invention is not limited to the use of these polymers.

It will be appreciated that the screen may function as freshness-preserving barrier package around the filtration enclosure of the capsules according to the present invention, in particular when the screen is closed at the bottom before use as described above. However, it may be desirable to package one or more of the capsules according to the present invention in a suitable freshness-preserving secondary package.

Accordingly, in a second aspect, the present invention provides a packaged beverage preparation capsule comprising a beverage preparation capsule according to the present invention, and secondary packaging enclosing the capsule, wherein the secondary packaging is substantially impermeable to oxygen and water.

Preferably, the package is substantially shelf stable. That is to say, it may be stored at ambient temperature and atmospheric conditions for a period of at least 3 months, preferably at least one year, without significant deterioration of the contents.

The secondary packaging is suitably a pouch formed from substantially air- and water-impermeable sheet material. Suitably, each secondary package contains only one capsule according to the invention, but in some cases there may be more than one capsule in a single secondary package. Suitably, the secondary packaging incorporates a line of weakness and/or nips in one or more edges thereof to assist opening of the secondary packaging. Suitably, the secondary packaging comprises an aperture for suspending the packaged beverage preparation capsule from a support such as a rod or a rail in a package storage or display device.

It will be appreciated that a further advantage of the present invention is that the capsules can be made by simple modification of existing equipment used to make tea bags and coffee bags.

Accordingly, in a further aspect, the present invention provides a method of manufacture of a beverage preparation capsule comprising the steps of:
providing a first web of filtration sheet material;
depositing a dose of a beverage making ingredient at a location on the said first web;
depositing a liquid injection nozzle on the first web adjacent to the location of the dose of beverage making ingredient
superimposing a second web of filtration sheet material on the first web, the dose of beverage making ingredient and the nozzle;
bonding the first and second webs together along a sealing margin extending around the location of the dose of beverage-making ingredient and including the location of the nozzle, such that the nozzle is sealed between the first and second webs in said margin by said bonding; and
cutting the first and second webs around said sealing margin to release said capsule from the webs.

Suitably, the method according to the invention of manufacture of a beverage preparation capsule used for the manufacture of a beverage preparation capsule according to the present invention.

Suitably, the first web of filtration sheet material is provided in substantially horizontal orientation prior to deposition of the beverage making ingredient on the first web.

Suitably, the step of providing the first web further comprises providing a depression in the first web at said location for receiving the beverage making ingredient. The depression may be provided by applying suction below the web at said location, and this suction can also assist in localising and compacting the deposited beverage making ingredient at the location.

The step of depositing a dose of a beverage making ingredient at a location on the first web may be carried out by any of the conventional methods used in coffee or tea bag manufacture, for example with a high speed rotary filler. In certain embodiments, the ingredient could be shaped or compacted. For example, the ingredient may be deposited as a compressed tablet (or even as whole coffee beans) and optionally broken up inside the capsule, for example with ultrasound.

Suitably, the step of bonding is by means of adhesive, heat, pressure, ultrasound, or a combination thereof.

Suitably, the step of cutting the web is performed with knives or with a pocketed roller for example as described in WO90/13487 or WO92/14649. Alternatively, the step of cutting the web may be carried out simultaneously with the step of bonding, for example with a suitably shaped heat sealing tool or ultrasonic sealing tool.

Where present, the screen of a liquid-impermeable sheet material partially enclosing the capsule body may be formed by bonding liquid impermeable sheet material around the nozzle either simultaneously or subsequently to the step of bonding the filter materials to the nozzle.

The beverage preparation capsule may be packaged in secondary packaging to provide the packaged capsule according to the present invention. The packaging step may be performed, for example, by conventional flow-wrap or form-fill-seal equipment.

It will be appreciated that the capsules according to the present invention may also be made according to alternative methods, for example the capsule body may be made first, with insertion of the nozzle in one or more subsequent steps. The filling of the capsule with the beverage making ingredient may be carried out after manufacture of the capsule body, for example the capsule may be filled through the nozzle.

The capsules of the present invention may be used in a method for the preparation of a beverage comprising the steps of: providing a capsule according to the present invention; providing a receptacle positioned to collect fluid escaping from the capsule; injecting liquid into the capsule through the nozzle to produce a beverage inside the capsule; and allowing the beverage to escape from the capsule into the receptacle.

The liquid may be injected into the capsule by a peristaltic or piston pump, preferably at an average rate of from about 250 to about 2000 ml/min and more preferably from about 500 to 1500 ml/min. The liquid may be injected in intermittent or pulsed fashion to optimise the organoleptic properties of the product.

Suitably, the liquid is injected into the capsule at pressures of from about 2kPa to about 50kPa gauge (about 0.02 to about 0.5 bar), for example about 5kPa to about 20kPa (about 0.05 to about 0.2 bar). These low pressures are made possible by the high porosity of the capsule. The ability to produce good quality beverages with low pressure equipment is an advantage of the present invention.

However, the capsules according to the present invention may also be used with higher-pressure processes, for example where a different flavor extraction profile is desired. For example, the liquid may be injected into the capsule containing the beverage brewing ingredient at pressures of from about 200 kPa to about 2 MPa (about 2 to about 20 bar), preferably from about 200 kPa to about 1 Mpa (about 2 to about 10 bar). These pressures are conventionally generated for brewing espresso coffee. In these embodiments, the capsule is preferably held in a clamp, for example a conformable clamp as described in US-B-6805041 (the entire content of which is incorporated herein by reference), to prevent bursting of the capsule under pressure.

For a hot beverage the temperature of the liquid is typically from about 75 to about 100 degrees C.

Suitably, the total amount of liquid injected into the capsules according to the present invention is from 100 to 400 ml.

It has surprisingly been found that the simplified capsule design according to the present invention provide equivalent or even improved taste extraction profiles as compared to beverage brewing capsules according to EP-A-0179641. The capsules according to the present invention require lower system pressures in the beverage making apparatus, because of the larger liquid-permeable surface area of the capsules relative to those of EP-A-0179641. Furthermore, the technology of biodegradable filtration webs for use in e.g. biodegradable tea bags is well developed, and therefore it is much more straightforward to make capsules according to the present invention partially or fully degradable. A further technical advantage is that a less expensive laminate film may be used for the enclosure, thereby reducing the overall cost of the capsules. A yet further advantage is that the capsules according to the present invention can be manufactured inexpensively and at high speed by simple modification of the technology used to produce tea bags and coffee bags. Production rates as high as 400-500 capsules per minute are readily achievable.

It will be appreciated that, for economy of the description, the preferred and alternative features have in some cases been described in relation to only one aspect of the invention even though they are applicable to all of the other aspects. Accordingly, any feature that has been described above in relation to any one aspect of the invention may also be applied to any other aspect of the invention.

Specific embodiments of the present invention will now be described further, by way of example, with reference to the accompanying drawings, in which:
Figure 1 shows a view in side elevation of a beverage making capsule according to the present invention;
Figure 2 shows a top plan view of the capsule of Figure 1;
Figure 3 shows a side elevation view of a second embodiment of the invention incorporating a screen of liquid-impermeable sheet material;
Figure 4 shows a packaged beverage preparation capsule according to the present invention.

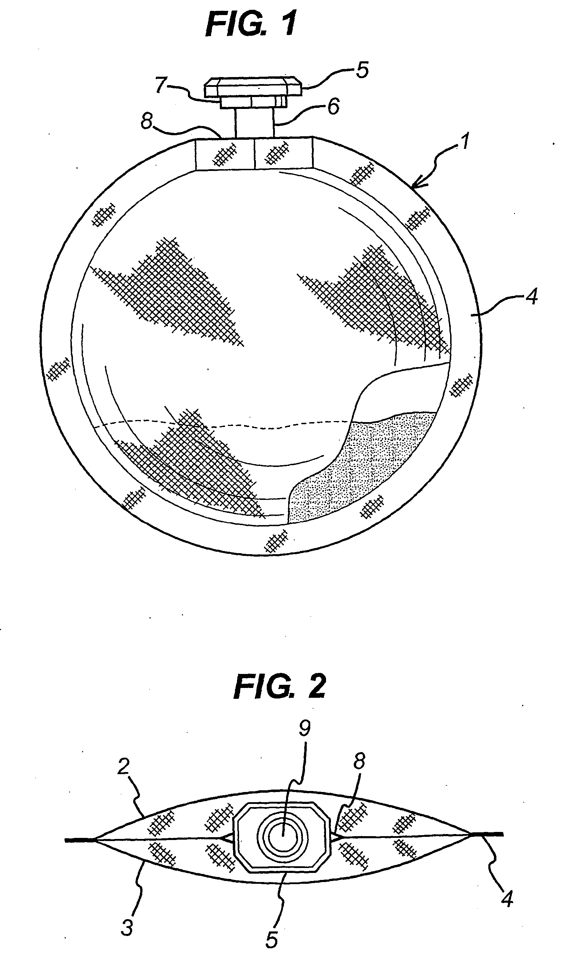

Referring to Figures 1 and 2, the capsule comprises a body 1 formed from front and back sheets 2,3 of a spunbonded filter fabric of the kind conventionally used for manufacturing tea bags or coffee bags. The filter fabric comprises thermoplastic fiber, and the body 1 is formed by bonding the front and back sheets 2, 3 together using heat and pressure around a peripheral margin 4. An injection molded polypropylene nozzle 5 substantially as used in the current generation of FLAVIA capsules is inserted between the sheets 2,3 in the peripheral margin thereof, and is bonded thereto by heat and pressure to form a seal that prevents escape of the capsule contents in the vicinity of the nozzle 5.

The nozzle 5 will now be described in more detail. In comprises a central cylinder 6, a top flange 7 and a lozenge-shaped elongated bottom flange 8. A substantially cylindrical bore runs through the nozzle from top to bottom when injection of water into the capsule. A freshness barrier 9 extends across the bore to retain the capsule contents before use. The barrier 9 may be molded integrally with the nozzle 5, in which case it comprises at least peripheral portions that are sufficiently thin to allow the barrier 9 to be pierced or pushed into the capsule by an injector tube inserted into the top of the nozzle from a beverage making apparatus. The top flange 7 enables the nozzle to be gripped in the beverage making apparatus by use of a clamp engaging the tubular section 6. The bottom flange 8 has an elongated shape to assist continuous bonding of the webs 2, 3 to the nozzle 5.

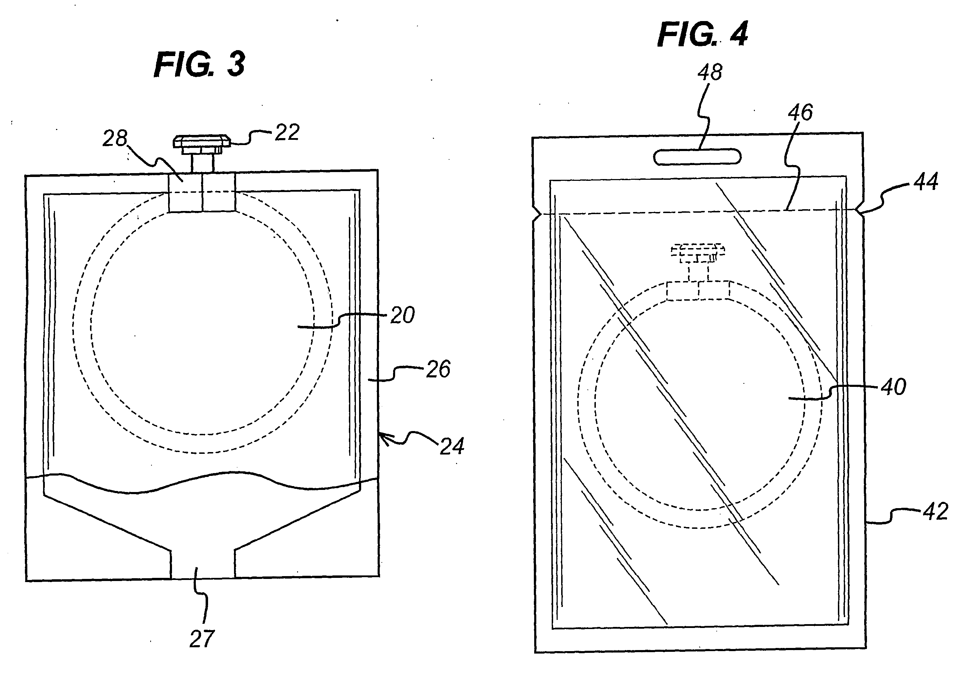

Referring to Figure 3, the capsule according to this embodiment comprises the capsule body 20 and nozzle 22 substantially as described in relation to Figs. 1 and 2. However, the embodiment of Fig. 3 further comprises the screen 24 of liquid-impermeable sheet material partially enclosing the capsule body 20. The screen 24 is formed from front and back faces of liquid-impermeable sheet material that are thermally bonded together around margin 26. A gap 27 in the bonding between the front and back sheets of liquid-impermeable material provides an outlet for the beverage produced in the capsule body 20. The liquid-impermeable screen in the vicinity of the outlet 27 is shaped as a funnel to direct the beverage to outlet 27, and thereby to deposit the beverage accurately in a receptacle located beneath the capsule. Figure 3 also shows how the screen is attached to the bottom flange of the nozzle 22, for example by thermal or adhesive bonding.

In use, the capsules according to the above-described embodiments of the invention are inserted into a beverage making machine, for example of the type described in GB-A-2122881 or GB-A-2123685 or GB-A-2121762, or of the type commercially available under the registered trade mark FLAVIA. The beverage making machine comprises a clamp that grips the nozzle beneath the top flange thereof. A liquid injector tube, for example a hollow tube of stainless steel, is inserted into the tubular bore of the nozzle, and preferably forms a substantially liquid-tight fit therein. A beverage making fluid usually hot water or steam or mixtures thereof is injected through the injector tube into the capsule. The liquid dissolves or extracts beverage components from the beverage making ingredient via the capsule. The beverage then flows out through the walls of the capsule body and falls under gravity into a receptacle positioned underneath the capsule. Water and/or steam and/or air may be injected in pulsed fashion as described in GB-A-2123685. Compressed air may be injected at the end of the beverage preparation cycle to expel residual liquid from the capsule.

Referring to Figure 4, the packaged beverage preparation capsule according to the present invention comprises a capsule 40 as described in relation to the Figs. 1 and 2 enclosed in a substantially oxygen-impermeable pouch 42 formed by thermally bonding together front and back faces of suitable sheet material. Nips 44 and a line of weakness 46 are formed in an upper region of the pouch to assist opening. An aperture 48 is also provided in the upper region of the pouch to enable the pouch to be suspended from a support such as a rod or a rail, for example in a pouch storage or transport device.

The above embodiments have been described by way of example only. Many other embodiments falling within the scope of the accompanying claims will be apparent to the skilled reader.

## Claims

1. A beverage preparation capsule comprising:
a body (1,20) consisting essentially of a filtration sheet material defining an enclosure for retaining a beverage brewing ingredient, wherein two opposed edges of the filtration material are bonded together to form a sealed edge of the body (1,20); and
a beverage preparation ingredient retained inside the capsule body;
**characterized in that** a liquid injection nozzle (5,22) for injecting liquid into the body is secured into the sealed edge by bonding of the nozzle (5,22) to the said two opposed edges of the filtration sheet material.

2. A beverage preparation capsule according to claim 1, wherein the body consists essentially of superimposed front and back sheets (2,3) of the filtration sheet material that are bonded together around their peripheries.

3. A beverage preparation capsule according to any preceding claim, wherein the nozzle (5,22) is a thermoplastic nozzle having a tubular bore for receiving a liquid injector tube from a beverage preparation machine.

4. A beverage preparation capsule according to claim 3, wherein the tubular bore is sealed by a frangible barrier (9) to prevent escape of the beverage preparation ingredient prior to preparation of the beverage.

5. A beverage preparation capsule according to any preceding claim, further comprising a screen (24) of a liquid-impermeable sheet material partially enclosing the capsule body (20), wherein the screen (24) comprises an opening in a lower region thereof to allow escape of beverage from the capsule.

6. A beverage preparation capsule according to claim 5, wherein the screen (24) is substantially shaped as a funnel in a lower region thereof to direct the outflow of said beverage to an outlet (27) at the base of the funnel.

7. A packaged beverage preparation capsule comprising a beverage preparation capsule (40) according to any preceding claim, and secondary packaging (42) enclosing the capsule, wherein the secondary packaging (42) is substantially impermeable to oxygen and moisture.

8. A packaged beverage preparation capsule according to claim 7, wherein the secondary packaging (42) incorporates a line of weakness (46) to assist opening of the secondary packaging, and further comprises an aperture (48) for suspending the packaged beverage preparation capsule from a support.

9. A method of manufacture of a beverage preparation capsule comprising the steps of:
providing a first web (2) of filtration sheet material;
depositing a dose of a beverage making ingredient at a location on the said first web (2);
depositing a liquid injection nozzle (5,22) on the first web adjacent to the location of the dose of beverage making ingredient
superimposing a second web (3) of filtration sheet material on the first web (2), the dose of beverage making ingredient and the nozzle (5,22);
bonding the first and second webs (2,3) together along a sealing margin (4) extending around the location of the dose of beverage-making ingredient and including the location of the nozzle (5,22), such that the nozzle is sealed between the first and second webs (2,3) in said margin (4) by said bonding; and
cutting the first and second webs around said sealing margin (4) to release said capsule from the webs.

10. A method of manufacture of a beverage preparation capsule according to claim 9, wherein the said bonding and cutting are carried out in a single step.

11. A method of manufacture of a beverage preparation capsule according to claim 10, wherein the said bonding and cutting are carried out with ultrasound.

12. A method of manufacture of a beverage preparation capsule according to any of claims 9 or 11, wherein the step of providing the first web (2) further comprises providing a depression in the first web (2) at said location for receiving the beverage making ingredient.

## Patentansprüche

1. Getränkezubereitungspatrone, umfassend:
einen Körper (1, 20), der im wesentlichen aus einem Filtrationsschichtmaterial besteht,
das eine Umhüllung zur Aufnahme eines Getränkebrühinhaltsstoffes definiert, wobei zwei gegenüberliegende Kanten des Filtrationsmaterials miteinander verbunden sind,
um eine versiegelte Kante des Körpers (1, 20) zu bilden; und
einen Getränkezubereitungsinhaltsstoff, der innerhalb des Patronenkörpers aufgenommen ist;
**dadurch gekennzeichnet, dass** eine Flüssigkeitsinjektionsdüse (5, 22) zum Injizieren von Flüssigkeit in den Körper hinein in die versiegelte Kante hinein befestigt ist,
indem die Düse (5, 22) mit den zwei gegenüberliegenden Kanten des Filtrationsschichtmaterials verbunden ist.

2. Getränkezubereitungspatrone nach Anspruch 1, wobei der Körper im wesentlichen aus übereinandergelegten vorderen und hinteren Schichten (2, 3) des Filtrationsschichtmaterials besteht, die miteinander entlang ihrer Umfänge verbunden sind.

3. Getränkezubereitungspatrone nach einem vorangehenden Anspruch, wobei die Düse (5, 22) eine thermoplastische Düse mit einer röhrenförmigen Bohrung zur Aufnahme einer Flüssigkeitsinjektorröhre von einer Getränkezubereitungsmaschine ist.

4. Getränkezubereitungspatrone nach Anspruch 3, wobei die röhrenförmige Bohrung mit einer zerbrechbaren Sperrschicht (9) versiegelt ist, um den Austritt des Getränkezubereitungsinhaltsstoffes vor der Zubereitung des Getränkes zu verhindern.

5. Getränkezubereitungspatrone nach einem vorangehenden Anspruch, die weiter eine Abschirmung (24) aus einem flüssigkeitsundurchlässigen Schichtmaterial umfasst, die den Patronenkörper (20) teilweise umschließt, wobei die Abschirmung (24) eine Öffnung in einem unteren Bereich derselben umfasst, um den Austritt von Getränk aus der Patrone zu ermöglichen.

6. Getränkezubereitungspatrone nach Anspruch 5, wobei die Abschirmung (24) in einem unteren Bereich derselben im wesentlichen als ein Trichter ausgebildet ist, um das Ausfließen des Getränkes zu einem Auslass (27) an der Basis des Trichters zu lenken.

7. Verpackte Getränkezubereitungspatrone, umfassend eine Getränkezubereitungspatrone (40) nach einem vorangehenden Anspruch und eine Sekundärverpackung (42), die die Patrone umschließt, wobei die Sekundärverpackung (42) für Sauerstoff und Feuchtigkeit im wesentlichen undurchlässig ist.

8. Verpackte Getränkezubereitungspatrone nach Anspruch 7, wobei die Sekundärverpackung (42) eine Schwächungslinie (46) einschließt, um das Öffnen der Sekundärverpackung zu unterstützen, und weiter eine Öffnung (48) zum Aufhängen der verpackten Getränkezubereitungspatrone an einer Halterung umfasst.

9. Verfahren zur Herstellung einer Getränkezubereitungspatrone, das die Schritte umfasst:
Bereitstellen eines ersten Gewebes (2) aus Filtrationsschichtmaterial;
Platzieren einer Dosis eines Getränkeherstellungsinhaltsstoffes an einer Stelle auf dem ersten Gewebe (2);
Platzieren einer Flüssigkeitsinjektionsdüse (5, 22) auf dem ersten Gewebe benachbart zur Stelle der Dosis des Getränkeherstellungsinhaltsstoffes;
Legen eines zweiten Gewebes (3) aus Filtrationsschichtmaterial über das erste Gewebe (2), die Dosis des Getränkeherstellungsinhaltsstoffes und die Düse (5, 22);
Verbinden der ersten und zweiten Gewebe (2, 3) miteinander entlang eines Versiegelungsrandes (4), der sich um die Stelle der Dosis des Getränkeherstellungsinhaltsstoffes herum erstreckt und die Stelle der Düse (5, 22) einschließt, so dass die Düse zwischen den ersten und zweiten Geweben (2, 3) innerhalb des Randes (4) durch besagtes Verbinden eingesiegelt ist; und
Schneiden der ersten und zweiten Gewebe um den Versiegelungsrand (4) herum, um die Patrone von den Geweben zu lösen.

10. Verfahren zur Herstellung einer Getränkezubereitungspatrone nach Anspruch 9, wobei das Verbinden und Schneiden in einem einzigen Schritt durchgeführt werden.

11. Verfahren zur Herstellung einer Getränkezubereitungspatrone nach Anspruch 10, wobei das Verbinden und Schneiden mit Ultraschall durchgeführt werden.

12. Verfahren zur Herstellung einer Getränkezubereitungspatrone nach einem der Ansprüche 9 oder 11, wobei der Schritt des Bereitstellens des ersten Gewebes (2) weiter umfasst, dass eine Vertiefung im ersten Gewebe (2) an der Stelle zur Aufnahme des Getränkeherstellungsinhaltsstoffes bereitgestellt wird.

## Revendications

1. Capsule de préparation de boisson comprenant :
un corps (1, 20) essentiellement constitué d'un matériau de feuille de filtration définissant une enceinte destinée à retenir un ingrédient pour préparation de boisson, dans lequel deux bords opposés du matériau de filtration sont liés ensemble pour former un bord scellé du corps (1, 20) ; et
un ingrédient pour préparation de boisson retenu à l'intérieur du corps de capsule ;
**caractérisé en ce qu'**une buse d'injection de liquide (5, 22) pour l'injection de liquide dans le corps est fixée dans le bord scellé par liage de la buse (5, 22) auxdits deux bords opposés du matériau de feuille de filtration.

2. Capsule de préparation de boisson selon la revendication 1, dans laquelle le corps est constitué essentiellement de feuilles avant et arrière superposées (2, 3) du matériau de feuille de filtration, qui sont liées ensemble autour de leurs périphéries.

3. Capsule de préparation de boisson selon l'une quelconque des revendications précédentes, dans laquelle la buse (5, 22) est une buse thermoplastique présentant un alésage tubulaire pour la réception d'un tube injecteur de liquide d'une machine de préparation de boisson.

4. Capsule de préparation de boisson selon la revendication 3, dans laquelle l'alésage tubulaire est scellé par une barrière cassable (9) afin d'éviter que l'ingrédient pour préparation de boisson ne s'échappe avant la préparation de la boisson.

5. Capsule de préparation de boisson selon l'une quelconque des revendications précédentes, comprenant en outre un écran (24) en un matériau de feuille imperméable aux liquides renfermant partiellement le corps de capsule (20), l'écran (24) comprenant une ouverture dans sa région inférieure afin de permettre que la boisson s'échappe de la capsule.

6. Capsule de préparation de boisson selon la revendication 5, dans laquelle l'écran (24) a essentiellement la forme d'un entonnoir dans sa région inférieure afin de diriger le flux sortant de ladite boisson vers un orifice d'évacuation (27) à la base de l'entonnoir.

7. Capsule de préparation de boisson sous emballage comprenant une capsule de préparation de boisson (40) selon l'une quelconque des revendications précédentes, et un emballage secondaire (42) renfermant la capsule, l'emballage secondaire (42) étant essentiellement imperméable à l'oxygène et à la moisissure.

8. Capsule de préparation de boisson sous emballage selon la revendication 7, dans laquelle l'emballage secondaire (42) incorpore une ligne de faiblesse (46) destinée à faciliter l'ouverture de l'emballage secondaire, et comprend en outre une ouverture (48) pour la suspension de la capsule de préparation de boisson sous emballage à un support.

9. Procédé de fabrication d'une capsule de préparation de boisson comprenant les étapes consistant à :
fournir une première bande continue (2) de matériau de feuille de filtration ;
déposer une dose d'un ingrédient pour préparation de boisson au niveau d'un emplacement situé sur ladite première bande continue (2) ;
déposer une buse d'injection de liquide (5, 22) sur la première bande continue, en contiguïté de l'emplacement de la dose d'ingrédient pour préparation de boisson
superposer une seconde bande continue (3) de matériau de feuille de filtration à la première bande continue (2), la dose d'ingrédient pour préparation de boisson et la buse (5, 22) ;
lier la première et la seconde bandes continues (2, 3) ensemble le long d'une marge de scellage (4) s'étendant autour de l'emplacement de la dose de préparation de boisson et incluant l'emplacement de la buse (5, 22), de façon que la buse soit scellée entre la première et la seconde bandes continues (2, 3) dans ladite marge (4) par ledit liage ; et
découper les première et seconde bandes continues autour de ladite marge de scellage (4) afin de libérer ladite capsule des bandes continues.

10. Procédé de fabrication d'une capsule de préparation de boisson selon la revendication 9, dans lequel ledit liage et ledit découpage sont effectués en une seule étape.

11. Procédé de fabrication d'une capsule de préparation de boisson selon la revendication 10, dans lequel ledit liage et ledit découpage sont effectués avec des ultrasons.

12. Procédé de fabrication d'une capsule de préparation de boisson selon l'une quelconque des revendications 9 ou 11, dans lequel l'étape consistant à fournir la première bande continue (2) comprend en outre la réalisation d'un creux dans la première bande continue (2) au niveau dudit emplacement pour recevoir l'ingrédient pour préparation de boisson.
